# DEMANDE DE BREVET EUROPEEN

(11) **EP 3 107 054 A1**
(43) Date de publication de la demande: **21.12.2016**
(21) Numéro de dépôt: 16174690.4
(22) Date de dépôt: 16.06.2016
(51) Int. Cl.: G06Q 20/20, G06Q 20/32, H04B 1/3877, H04B 1/3883, H04M 1/02

(54) **TERMINAL FIXE TRANSFORMABLE EN TERMINAL FIXE/PORTABLE, PROCÉDÉ DE TRANSFORMATION ET SYSTÈME DE GESTION D'AUTONOMIE ASSOCIÉS**

(30) Priorité: 19.06.2015 FR 1555639
(71) Demandeur: Ingenico Group, 75015 Paris (FR)
(72) Inventeur: JANOT, Cyril, 26400 GRANE (FR); GEORGES, Didier, 26120 CHABEUIL (FR); WOLFF, Caroline, 92150 SURESNE (FR); SOUBIRANE, Alain, 26500 BOURG-LES-VALENCE (FR); NEVEU, Ludovic, 94410 SAINT-MAURICE (FR); LEBONNOIS, Etienne, 26730 LA BAUME D'HOSTUN (FR); ESTORGES, Stéphane, 75015 PARIS (FR)
(74) Mandataire: Vidon Brevets & Stratégie

(57) **Abrégé**

La présente invention concerne un terminal électronique (100) fixe comprenant au moins un emplacement (10) destiné à accueillir de manière réversible un système électronique de gestion de l'autonomie du terminal.

## Description

### 1 Domaine de l'invention

La présente invention se rapporte au domaine des terminaux de paiement électroniques fixes, et plus particulièrement aux terminaux de paiement électronique fixes présentant une certaine autonomie vis à vis de leur alimentation électrique.

### 2 Solutions de l'art antérieur

La problématique de rendre les dispositifs électroniques alimentés sur secteur résistants aux coupures d'alimentation s'est posée de longue date.

La solution communément apportée consiste à proposer un dispositif électronique incluant une alimentation autonome sur batterie apte à prendre le relai de l'alimentation sur secteur en cas de coupure de cette dernière. Dans ce cas, la batterie n'est pas dimensionnée pour permettre une autonomie longue comme dans le cas d'un équipement nomade, mais plutôt pour permettre le bon fonctionnement de l'équipement lors de microcoupures de l'alimentation secteur ou éventuellement pour permettre à l'équipement de s'éteindre correctement, sans dommage pour son état logique courant par exemple.

Dans le cas d'un terminal de paiement fixe, il y a par exemple un intérêt à avoir une autonomie suffisante pour permettre d'assurer la fin d'une transaction déjà initiée, mais également pour permettre une autonomie suffisante pour autoriser des transactions en mode portable. Ce peut être le cas dans le but de permettre une manipulation plus aisée du terminal lors d'une saisie de données sur le terminal par exemple.

Par ailleurs, ce type d'alimentation de secours est intégré aux dispositifs proposant ce genre de service dès leur fabrication.

Cependant, une batterie, même de capacité limitée, reste d'un coût non négligeable au regard du coût global d'un terminal électronique. De même, l'électronique de gestion de l'autonomie reste sensiblement la même quelle que soit la capacité de la batterie. Ceci engendre un surcoût qui peut être rédhibitoire pour une fonction qui peut se réduire à la résistance aux microcoupures. Certains utilisateurs de terminaux fixes peuvent ainsi ne pas être intéressés par une telle autonomie, préférant garder une solution classique à moindre coût.

Il existe donc un besoin pour une solution permettant de rendre un terminal de paiement électronique fixe résistant aux coupures d'alimentation ainsi que capable de mobilité sur une zone réduite, à moindre coût.

Il existe également un besoin pour que cette mise à niveau soit possible pendant la durée de vie du terminal fixe pour offrir une solution optimale en terme de coût, dans un environnement concurrentiel où le prix d'un terminal est un enjeu primordial pour les fabricants.

### 3 Résumé de l'invention

L'invention propose une solution nouvelle qui ne présente pas l'ensemble de ces inconvénients de l'état de la technique, sous la forme d'un terminal électronique fixe comprenant au moins un emplacement destiné à accueillir de manière réversible un système électronique de gestion de l'autonomie du terminal.

Ainsi, l'invention propose une solution nouvelle et inventive pour permettre la transformation d'un terminal électronique fixe en un terminal électronique fixe/mobile résistant aux coupures d'alimentation secteur intempestives ainsi qu'offrant une autonomie suffisante pour autoriser des transactions en mode portable, tout en maintenant un coût optimum de la solution.

En effet, l'invention prévoit que le système de gestion de l'autonomie soit entièrement optionnel, tous les composants matériels nécessaires à cette alimentation embarquée/autonome étant installés à bord du terminal uniquement lorsque l'on veut bénéficier de cette fonctionnalité. Le coût du terminal fixe « nu », c'est à dire sans le système électronique de gestion de l'autonomie, reste par là même équivalent à celui d'un terminal électronique fixe standard.

Pour ce faire, l'invention propose un terminal électronique fixe présentant un emplacement permettant de connecter, de manière réversible, un système électronique de gestion de l'autonomie du terminal. Par exemple, ce système électronique de gestion de l'autonomie du terminal peut comprendre deux éléments/modules principaux consistant en une batterie et un module électronique permettant le bon fonctionnement du terminal lorsqu'il est alimenté par la batterie.

Selon une caractéristique particulière de l'invention, le terminal comprend une trappe amovible recouvrant au moins en partie l'emplacement lorsqu'elle est positionnée dans le terminal.

Ainsi, selon ce mode de réalisation de l'invention, le terminal présente une trappe amovible adaptée à la protection de l'emplacement destiné à recevoir le système électronique de gestion de l'autonomie. Avantageusement, cette protection concerne la connectique destinée à la connexion au terminal des parties électroniques de ce système de gestion. Ainsi, lors de la transformation du terminal fixe en terminal fixe/mobile, le risque d'un défaut de fonctionnement dû à une dégradation de cette connectique survenue pendant la durée d'utilisation du terminal en mode fixe est minimisé.

Selon un aspect particulier de l'invention, le terminal comprend en outre des moyens de fixation d'une pièce de maintien amovible recouvrant au moins une partie du système électronique de gestion de l'autonomie lorsqu'elle est positionnée dans le terminal, les moyens de fixation coopérant avec des moyens de fixation complémentaires sur la pièce de maintien dans une position de verrouillage de la pièce de maintien dans le terminal, les moyens de fixation et/ou les moyens de fixation complémentaires étant inaccessibles dans la position de verrouillage.

Ainsi, selon ce mode de réalisation de l'invention, une pièce de maintien est placée sur le système électronique de gestion de l'autonomie pour permettre son verrouillage dans le terminal une fois ce dernier transformé en terminal fixe/mobile.

En effet, selon l'invention, l'utilisateur peut facilement transformer le terminal fixe en terminal fixe/mobile en procédant lui même à l'insertion et à la connexion du système électronique de gestion de l'autonomie via par exemple un capot amovible du terminal. Cependant, une succession de retraits et de remises en place du système électronique peut conduire par exemple à une dégradation des connecteurs électroniques, et donc à des dysfonctionnements du dispositif à terme. Afin de limiter les manipulations du système électronique de gestion de l'autonomie, le présent mode de réalisation de l'invention prévoit que le système de gestion de l'autonomie soit verrouillé au terminal lors de son usage usuel, protégeant ainsi la connectique électronique. Par exemple, la pièce de maintien peut aisément se fixer sur tout ou partie du système électronique de gestion de l'autonomie, mais une fois fixée dans le terminal, les moyens de fixation, et donc de retrait, qui coopèrent avec des moyens complémentaires du terminal, ne sont plus accessibles si le terminal n'est pas démonté.

Selon ce mode de réalisation de l'invention, cette pièce de maintien peut ne recouvrir qu'une partie du système électronique de gestion de l'autonomie, avantageusement, la partie électronique de ce système de gestion de l'autonomie. Ainsi, la batterie reste accessible pour un démontage facile, cette pièce d'usure pouvant en effet nécessiter plusieurs changements pendant la durée de vie du terminal transformé en terminal fixe/mobile.

Par exemple, les moyens de fixation sont des moyens de clippage aptes à coopérer avec les moyens de fixation complémentaires sur la pièce de maintien.

Ainsi, selon ce mode de réalisation de l'invention, la pièce de maintien peut être mise en place de manière très aisée par l'utilisateur via un simple clippage sur la structure du terminal électronique, les moyens de clippage de la pièce de maintien et du terminal étant rendus inaccessibles sans démontage du terminal.

Par exemple, les moyens de clippage correspondant à un ou plusieurs ergots coopérant avec une ou plusieurs fentes, la partie non déformable d'un clip étant présent sur le terminal et la partie déformable sur la pièce de maintien.

Selon un mode de réalisation particulier de l'invention, le terminal est un terminal de paiement électronique.

L'invention concerne également un système électronique de gestion de l'autonomie d'un terminal électronique tel que décrit précédemment, comprenant au moins une batterie et au moins un module électronique de gestion de l'autonomie du terminal.

Ainsi, l'invention concerne également le système électronique permettant la transformation du terminal fixe en terminal fixe/mobile, ce système comprenant au moins une batterie et un module électronique de gestion de l'autonomie. Avantageusement, le module de gestion comprend tous les composants matériels nécessaires à la gestion de l'autonomie du terminal, i.e. aussi bien la gestion de la recharge de la batterie lorsque l'alimentation secteur est présente que la génération de toutes les tensions régulées nécessaires au fonctionnement du terminal en mode autonome. Ainsi, le coût du terminal fixe dépourvu de l'option « autonomie » reste minimal et similaire à celui d'un terminal fixe standard.

En particulier, le système électronique de gestion de l'autonomie comprend en outre une pièce de maintien du module électronique de gestion de l'autonomie.

Ainsi, selon ce mode de réalisation de l'invention, le système de gestion de l'autonomie comprend une pièce de maintien du module de gestion permettant le verrouillage du module électronique de gestion de l'autonomie en conditions d'usage usuelles du terminal transformé en terminal fixe/mobile, de façon à limiter les manipulations du système électronique de gestion de l'autonomie pour limiter les risques de dégradation.

Enfin, l'invention concerne également un procédé de mise à niveau d'un terminal tel que décrit précédemment, le procédé comprenant une étape d'intégration, dans le terminal électronique, d'un système de gestion de l'autonomie tel que décrit précédemment.

Un tel procédé est en fait un procédé de transformation d'un terminal fixe vers un terminal fixe/mobile. En effet, l'invention permet à l'utilisateur d'effectuer cette opération de manière très simple quand il le désire pendant la durée de vie de son terminal fixe via une simple connexion du système de gestion de l'autonomie à son terminal fixe, grâce à l'emplacement prévu à cet effet dans le terminal électronique.

En particulier, l'étape d'intégration comprend une sous-étape de connexion au terminal électronique de la batterie du système de gestion de l'autonomie et du module électronique de gestion de l'autonomie du système de gestion de l'autonomie.

Ainsi, selon ce mode de réalisation de l'invention, le procédé de transformation du terminal fixe en terminal fixe/mobile permet d'une part la connexion d'une batterie et d'autre part la connexion d'un module électronique de gestion de l'autonomie. Ainsi, l'utilisateur peut gérer différemment la batterie, en tant que pièce d'usure, et le module électronique.

Par ailleurs, l'étape d'intégration comprend également une sous-étape de verrouillage de la pièce de maintien dans le terminal électronique, lorsque les sous-étapes de connexion sont effectuées.

Ainsi, selon ce mode de réalisation de l'invention, le procédé de transformation du terminal fixe en terminal fixe/mobile comprend également une sous-étape de mise en place d'une pièce de maintien permettant le verrouillage du module électronique de gestion de l'autonomie en conditions d'usage usuelles du terminal transformé en terminal fixe/mobile.

### 4 Liste des figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 est une vue d'une partie d'un terminal de paiement présentant un emplacement destiné à accueillir de manière réversible un système électronique de gestion de l'autonomie selon un mode de réalisation de l'invention ;
- la figure 2 illustre un exemple de trappe amovible recouvrant au moins en partie l'emplacement destiné à accueillir de manière réversible un système électronique de gestion de l'autonomie selon un mode de réalisation de l'invention ;
- la figure 3 illustre un exemple de module électronique de gestion de l'autonomie en place dans le terminal selon un mode de réalisation de l'invention ;
- la figure 4 illustre un exemple de pièce de maintien recouvrant et verrouillant le module électronique de gestion de l'autonomie selon un mode de réalisation de l'invention ;
- la figure 5 illustre un exemple de fixation de la pièce de maintien recouvrant et verrouillant le module électronique de gestion de l'autonomie selon un mode de réalisation de l'invention.

### 5 Description détaillée de l'invention

Le principe général de la technique décrite consiste à proposer un terminal électronique fixe qui présente la possibilité d'être transformé en un terminal fixe/mobile capable de conclure correctement une transaction en cours lors d'une coupure d'alimentation secteur ainsi que d'autoriser des transactions en mode portable, sans augmenter le coût de base du terminal en mode fixe.

Ainsi, la solution selon les différents modes de réalisation de l'invention permet de parvenir à cette transformation en connectant un système électronique de gestion de l'autonomie au terminal fixe.

La connexion du système électronique de gestion de l'autonomie peut avantageusement être réversible pour permettre la maintenance du système et le changement des composants le cas échéant.

Par la suite, on décrit plus particulièrement des modes de réalisation dans lesquels le terminal électronique correspond à un terminal de paiement électronique, mais l'invention s'applique à tout terminal électronique répondant aux mêmes problématiques de portabilité.

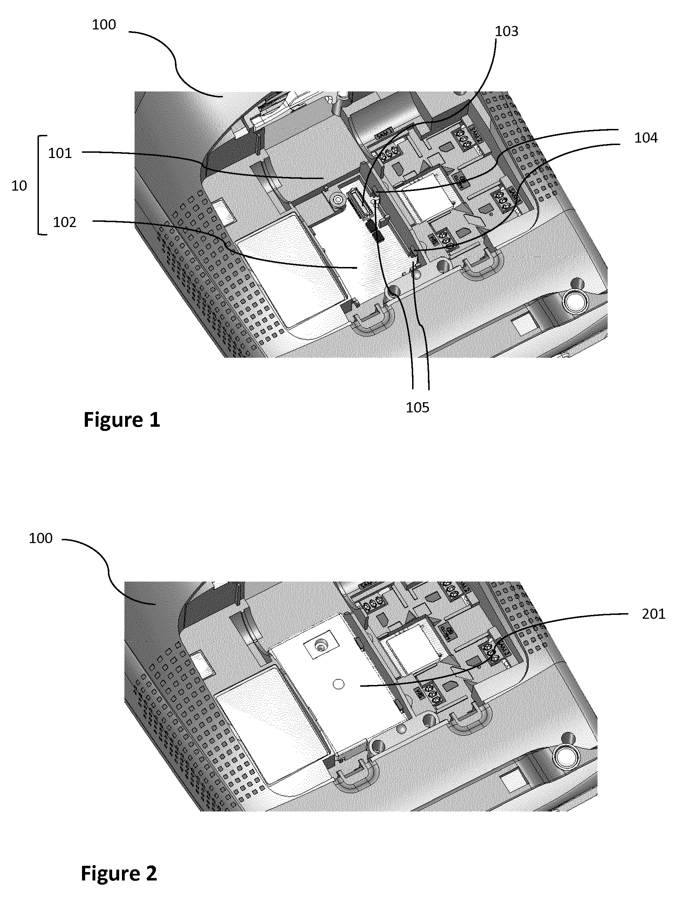

On décrit maintenant, en relation avec la figure 1, un exemple de terminal de paiement électronique fixe apte à être transformé en terminal de paiement électronique fixe/mobile selon l'invention. Selon ce mode de réalisation, le système électronique de gestion de l'autonomie du terminal fixe est composé de deux éléments distincts, i.e. d'une part d'une batterie servant de réservoir d'énergie électrique et d'autre part d'un module électronique de gestion de l'autonomie embarquant les fonctions nécessaires à la charge de la batterie ainsi qu'à la génération des alimentations requises par le terminal.

Ainsi, le terminal de paiement électronique fixe (100) selon ce mode de réalisation présente un emplacement (10) apte à recevoir un système électronique de gestion de l'autonomie.

Selon ce mode de réalisation, l'emplacement (10) comprend un premier logement/emplacement (101) apte à recevoir la batterie, et un second logement/emplacement (102) apte à recevoir le module électronique de gestion de l'autonomie, la batterie et le module électronique formant le système électronique de gestion de l'autonomie du terminal.

Ce module électronique de gestion de l'autonomie peut être avantageusement connecté au terminal via un connecteur intercarte (103) permettant l'échange de tous les signaux électriques entre les deux dispositifs tout en participant à la rigidité mécanique de l'ensemble.

Ainsi, le terminal de paiement électronique fixe (100) ne présente pas d'éléments intrinsèques spécifiques à la gestion de l'autonomie, contrairement aux terminaux « portables » de l'art antérieur qui sont conçus pour intégrer toute l'électronique de gestion de l'autonomie (par exemple sur le circuit imprimé du terminal de paiement électronique) et recevoir une batterie amovible éventuellement. En effet, un terminal de paiement électronique selon les différents modes de réalisation de l'invention présente au moins un emplacement destiné à recevoir un système électronique de gestion de l'autonomie, ainsi que les éléments de connectique nécessaire au bon fonctionnement du terminal de paiement électronique lorsqu'il est transformé en terminal portable (une fois connecté le système électronique de gestion de l'autonomie, i.e. le module électronique de gestion de l'autonomie et la batterie par exemple). Par ailleurs, le module électronique de gestion de l'autonomie et la batterie ont donc été conçus de façon à permettre le bon fonctionnement du terminal de paiement électronique en mode portable.

Selon ce mode de réalisation, la batterie est accessible indépendamment du reste du système de gestion de l'autonomie. Ainsi, le changement de cette pièce d'usure du système peut se faire de manière simple et sans avoir à interférer avec le module électronique de gestion de l'autonomie. Sauf problème de panne, ce dernier est effectivement destiné à rester fixe une fois installé dans le terminal.

Selon un mode de réalisation de l'invention, le terminal peut présenter des moyens de fixation (104) d'une pièce de maintien amovible recouvrant au moins une partie du système électronique de gestion de l'autonomie. Dans ce cas, les moyens de fixation coopèrent avec des moyens complémentaires présents sur la pièce de maintien afin de fixer cette dernière pièce.

Par ailleurs, dans ce mode de réalisation, des orifices (105) sont également présents pour permettre l'accès aux moyens complémentaires de fixation depuis l'intérieur du terminal une fois la pièce de maintien mise en place. Ainsi, cette dernière peut être retirée une fois le terminal démonté.

On décrit maintenant plus en détails la structure d'une trappe amovible (201), en relation avec la figure 2, selon un mode de réalisation de l'invention.

Selon ce mode de réalisation particulier de l'invention illustré en figure 2, la trappe amovible (201) recouvre l'emplacement (102) apte à recevoir le module électronique de gestion de l'autonomie. En particulier, la connectique destinée à assurer le transport des signaux électriques entre le terminal et le module électronique de gestion de l'autonomie se trouve protégée pendant la période où le terminal électronique fixe fonctionne sans la présence du système électronique de gestion de l'autonomie. Ainsi, le propriétaire du terminal est assuré que cette connectique ne sera pas dégradée le jour où il choisit d'investir dans l'option « autonomie ». La connexion du système électronique de gestion de l'autonomie au terminal électronique sera ainsi optimale, minimisant par là même les risques de panne du terminal électronique fixe/mobile.

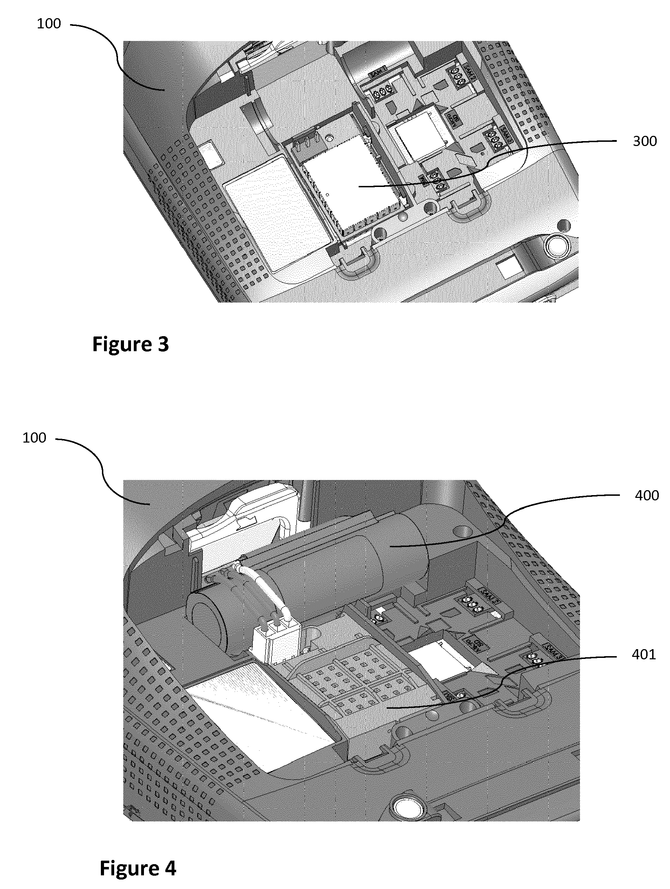

On décrit maintenant, en relation avec la figure 3, un exemple de terminal de paiement électronique fixe selon l'invention auquel on a connecté un module électronique de gestion de l'autonomie (300). Ainsi, après avoir retiré la trappe amovible (201), l'utilisateur peut très simplement insérer le module électronique de gestion de l'autonomie à l'emplacement (102) prévu à cet effet. En effet, selon le mode de réalisation illustré en figure 3, l'emplacement (101) apte à recevoir la batterie ainsi que l'emplacement (102) apte à recevoir le module électronique de gestion sont facilement accessibles à l'utilisateur via par exemple un capot amovible du terminal.

Selon l'invention, le module électronique de gestion (300) comprend avantageusement tous les composants électroniques nécessaires à la gestion de l'autonomie. Il s'agit alors aussi bien des convertisseurs et régulateurs nécessaires à la charge correcte de la batterie lorsque le terminal est alimenté par le secteur, que de ceux nécessaires à la génération de tous les niveaux d'alimentation requis par l'électronique embarquée dans le terminal pour son fonctionnement correct. Ainsi, le coût du terminal fixe en l'absence de l'option « autonomie » reste minimal et très proche de celui d'un terminal fixe standard.

Par ailleurs, les parties logicielles nécessaires au bon fonctionnement du système électronique de gestion de l'autonomie peuvent avantageusement être embarquées dans le terminal fixe dès le départ. Ainsi, le terminal fixe peut être apte à détecter la présence du système électronique de gestion de l'autonomie via un signal électrique délivré par ce dernier, permettant par là-même un fonctionnement direct du terminal fixe/mobile une fois que l'utilisateur a inséré et connecté la batterie et le module électronique de gestion. De la sorte, aucune compétence en électronique n'est requise de la part de l'utilisateur pour pouvoir transformer son terminal fixe en un terminal fixe/mobile.

On décrit maintenant plus en détail la structure d'une pièce de maintien (401), en relation avec la figure 4, selon un mode de réalisation de l'invention.

Selon ce mode de réalisation de l'invention, la pièce de maintien amovible (401) recouvrant au moins une partie du système électronique de gestion de l'autonomie présente des moyens de fixation qui coopèrent avec ceux présents sur le terminal électronique de manière à ce que cette pièce de maintien ne puisse être retirée sans procéder au démontage du terminal électronique.

Ainsi, selon ce mode de réalisation de l'invention, la pièce de maintien peut avantageusement recouvrir le module de gestion de l'autonomie, conduisant par la-même à son verrouillage une fois la pièce de maintien en place. Ainsi, bien qu'ayant été facilement mis en place par l'utilisateur via par exemple un capot amovible du terminal, le module de gestion de l'autonomie ne peut plus être facilement retiré par le même utilisateur. Ceci permet de garantir un fonctionnement pérenne du terminal en interdisant les insertions et retraits successifs du module de gestion de l'autonomie, ce qui pourrait entraîner sa dégradation propre, ou celle de la connectique du terminal. A contrario, la batterie (400) étant une pièce d'usure dont le changement peut être nécessaire pendant la durée de vie du terminal fixe/mobile, il peut être intéressant de ne pas la recouvrir d'une telle pièce de maintien pour que son extraction reste facile, par exemple via un capot amovible du terminal.

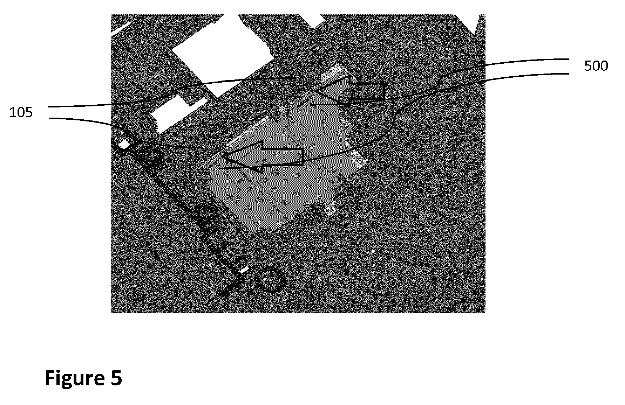

On décrit maintenant plus en détail la structure des moyens de fixation d'une pièce de maintien (401), en relation avec la figure 5, selon un mode de réalisation de l'invention.

Selon ce mode de réalisation de l'invention, la pièce de maintien amovible (401) recouvrant au moins une partie du système électronique de gestion de l'autonomie présente des moyens de clippage qui coopèrent avec ceux présents sur le terminal électronique. Plus précisément, selon ce mode de réalisation l'ergot en « O » (500) présent sur la pièce de maintien correspond à la partie déformable du système de clippage alors que l'ergot simple (104) présent sur le terminal électronique correspond à la partie complémentaire non déformable. Lors de la mise en place de la pièce de maintien dans le terminal électronique via un capot amovible du terminal par exemple, ces deux ergots complémentaires coopèrent de façon à fixer/verrouiller la pièce de maintien au terminal électronique. L'homme du métier comprendra alors tout de suite en référence à la figure 4, que l'accès direct à la partie déformable du système de clippage, ici les ergots en « O », via le capot amovible du terminal utilisé pour la mise en place de la pièce de maintien est interdit à l'utilisateur une fois cette pièce de maintien mise en place. Le démontage de cette pièce de maintien nécessite alors un démontage du terminal pour pouvoir accéder aux orifices (105) via l'intérieur du terminal. Ces orifices étant prévus pour permettre l'accès aux parties déformables de ces systèmes de clippage, le déverrouillage de ces systèmes est alors à nouveau possible, permettant alors le retrait de la pièce de maintien et par la même d'au moins une partie du système électronique de gestion de l'autonomie.

## Revendications

1. Terminal électronique (100) fixe **caractérisé en ce qu'**il comprend au moins un emplacement (10) destiné à accueillir de manière réversible un système électronique de gestion de l'autonomie dudit terminal.

2. Terminal selon la revendication 1, **caractérisé en ce qu'**il comprend une trappe amovible (201) recouvrant au moins en partie ledit emplacement lorsqu'elle est positionnée dans ledit terminal.

3. Terminal selon l'une quelconque des revendications 1 à 2, **caractérisé en ce qu'**il comprend en outre des moyens de fixation d'une pièce de maintien amovible recouvrant au moins une partie dudit système électronique de gestion de l'autonomie lorsqu'elle est positionnée dans ledit terminal, lesdits moyens de fixation coopérant avec des moyens de fixation complémentaires sur ladite pièce de maintien dans une position de verrouillage de ladite pièce de maintien dans ledit terminal, lesdits moyens de fixation et/ou lesdits moyens de fixation complémentaires étant inaccessibles dans ladite position de verrouillage.

4. Terminal selon la revendication 3 **caractérisé en ce que** lesdits moyens de fixation sont des moyens de clippage aptes à coopérer avec lesdits moyens de fixation complémentaires sur ladite pièce de maintien.

5. Terminal selon l'une quelconque des revendications 1 à 4, **caractérisé en ce que** ledit terminal est un terminal de paiement électronique.

6. Système électronique de gestion de l'autonomie d'un terminal électronique selon l'une quelconque des revendications 1 à 5, **caractérisé en ce qu'**il comprend au moins une batterie et au moins un module électronique de gestion de l'autonomie dudit terminal.

7. Système électronique de gestion de l'autonomie selon la revendication 6, **caractérisé en ce qu'**il comprend en outre une pièce de maintien dudit module électronique de gestion de l'autonomie.
